# EUROPEAN PATENT SPECIFICATION

(11) **EP 2 596 905 B1**
(45) Date of publication and mention of the grant of the patent: **07.01.2015**
(21) Application number: 12193426.9
(22) Date of filing: 20.11.2012
(51) Int. Cl.: B23Q 11/00

(54) **A swarf extraction tool**
Spanextraktionswerkzeug
Outil d'extraction de copeaux

(30) Priority: 23.11.2011 GB 201120159
(43) Date of publication of application: 29.05.2013
(73) Proprietor: Rolls-Royce plc, London SW1E 6AT (GB)
(72) Inventor: Done, Ian John, Oswestry, Shropshire SY11 1TW (GB); Cleal, Mark Jonathan, Northampton, NN4 6JU (GB); Darroch, Mark James, Houston, Renfrewshire PA6 7GA (GB); Cantor, Ben William, Borden, Kent ME9 8HZ (GB); Brown, William James, Derby, DE22 3TJ (GB); Maddock, James Philip John, Crediton, Devon EX17 4EA (GB)
(74) Representative: Hartley, Andrew Colin

(56) References cited:
- EP-A1- 2 617 520
- FR-A1- 2 950 550
- JP-U- H0 362 751
- US-A- 2 201 270
- US-A- 5 560 547
- US-A1- 2006 096 624

## Description

This invention relates to a tool for extracting swarf. In particular, this invention relates to a swarf extraction tool which uses the cutting fluid of the machine to create suction device with which the swarf can be extracted.

### Background to the Invention

When metallic parts are machined small off-cuts known as swarf are produced. The swarf is generally unwanted on a finished product but can also cause damage to the piece being machined and to tooling which carries out the cutting. Hence, removal of the swarf is desirable.

Previously, it has been commonplace for swarf to be removed manually by an operator using a hand tool or hand held suction device. However, this is of limited application where the work piece is large and the swarf is out of reach of the operator. Other techniques which have better access include air operated suction devices which are controlled by robotic arms.

US2201270 discloses a drill tool having a dust collector, the dust collector having a body having at least one conduit; a connector; a suction tube in fluid communication with the conduit, the suction tube having a suction inlet and a suction outlet; and a dust outlet through which the dust is ejected from the device. The conduit of the dust collector is arranged to create a pressure drop at the suction tube inlet when in use.

The present invention seeks to provide a method and device for extracting swarf from a machined work piece.

### Statements of Invention

The present invention provides a cutting machine according to claim 1.

Thus, the present invention is configured to use a cutting fluid supply of a cutting machine to generate suction and collect swarf. This is particularly advantageous in state of the art cutting machines as they use high pressure cutting fluid which can be utilised to create a high level of suction for removing large particles of swarf.

In the context of the invention, swarf is taken to mean the cuttings or chippings which are the result of machining a body. It will be appreciated that cutting fluid may also be referred to as cooling fluid, cutting oil, coolant or lubricant in the art and generally refers to one or more type of oil or oil and water emulsion. However, other types of cutting fluid known in the art may fulfil the purpose as required by the invention in accordance with the embodiments described below.

The device may further comprise at least one filter between the conduit and suction tube inlet. There may be a plurality of filters arranged in series between the conduit and suction inlet. Each filter may allow different sizes of swarf to pass through. The filters may be a wire frame lattice. The wire frame lattice may be a mesh. The dimensions between adjacent members in the mesh may be between 0.2mm and 3mm. Each mesh may be configured to remove a particular size of swarf particulate. The size of particulates may range between 0.2mm and 10mm. However, it will be appreciated that the tool of the invention may be adapted to extract other sizes of swarf, depending on the configuration of the machine and the pressure of the cutting fluid.

The outlet through which the swarf is ejected may be the suction tube inlet from the body. In this way, the suction tube can act as a collection point for the swarf which is held there until the tool is positioned over an external receptacle and suction removed so as to drop the collected swarf under gravity.

The connector is suitable for mounting in a tool holder of the cutting machine.

The conduit may include at least one nozzle. The nozzle may be arranged within the device to provide suction via a Venturi effect or mass transfer. The nozzle may be within a chamber. The chamber may be within the body. The device may further comprise at least one nozzle local to the suction tube inlet. The nozzle may be located to eject cutting fluid directly into the suction tube. There may be a plurality of nozzles along the length of the suction tube

The diameter of the suction tube may be in a range bounded by the values 15mm to 150mm. In one embodiment, the largest outside dimension of the tool is sized so as to allow it to be stored within a tool carousel. For example, the largest outside dimension may be below 100mm.

The swarf outlet and suction outlet may be the same.

The connector and suction tube may be co-axial.

The tool holder may be remotely operable.

The source of cutting fluid may be delivered to the device with a pressure in excess of 14MPa when in use. The pressure may be in the range of 2MPa to 20MPa. However, for state of the art CNC machines, the pressure is likely to be within the range 10MPa to 20MPa.

In a second aspect, the present invention provides a method according to claim 12.

The method of the second aspect wherein the swarf extraction tool may further comprise at least one filter placed between the suction inlet and the conduit, the method further comprising the steps of: extracting a predetermined amount of swarf from the work piece; manoeuvring the swarf extraction device away from the work piece; switching off the flow of cutting fluid through the conduit such that the suction at the suction inlet is reduced and the extracted swarf can be removed.

The method may further comprise flushing the suction tube with cutting fluid via the conduit.

The method may further comprise mounting the swarf extraction device on the cutting machine.

The source of cutting fluid may be provided through the tool holder of the machine.

The method may further comprise the steps of: mounting a work piece in the cutting machine, the work piece having a cavity in which the swarf has collected; placing the suction tube inlet within the entrance of the cavity; flooding the entrance of the cavity with cutting fluid.

### Description of Drawings

Embodiments illustrating the broader inventive concept are described below with the aid of the following drawings in which:
Figure 1 shows a schematic cross section of a cutting machine which utilises a swarf extraction device.
Figure 2 shows a schematic cross section of a first embodiment of a swarf extraction device
Figure 3 shows a first embodiment of a suction tube outlet.
Figure 4 shows a second embodiment of a suction tube outlet.
Figure 5 shows a second cross section of a second embodiment of a swarf extraction device.
Figure 6 shows a cross-sectional detail of the second embodiment.
Figure 7 shows a third embodiment.

### Detailed Description of Invention

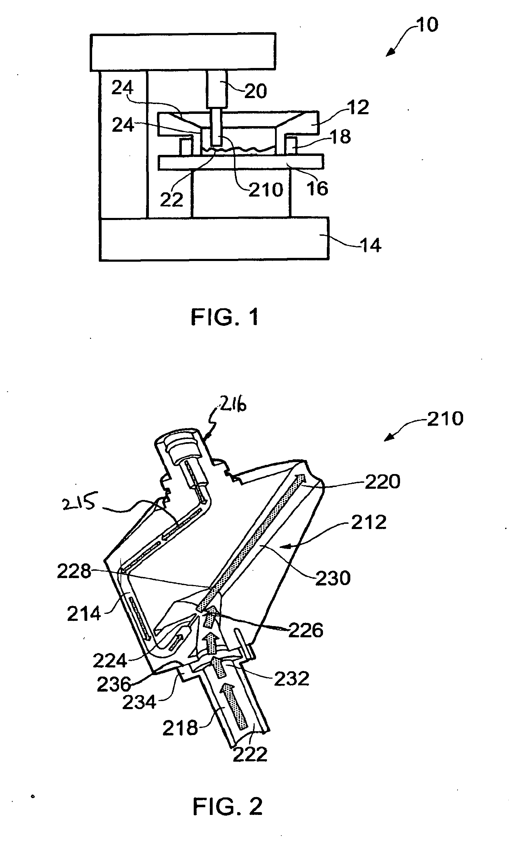

Figure 1 shows a cutting machine 10 in the form of a CNC which may be used for machining a work piece 12, for example, a rotor for a gas turbine engine. The cutting machine 10 includes a base 14 and a rotatable cutting table 16 upon which is mounted a chuck 18. The chuck holds the work piece 12 in place such that it can be rotated and material removed by a cutting tool (not shown) which would be mounted in a tool holder when in use. As is known in the art, when machining a work piece 12 in such a cutting machine 10, it is common practice to provide cutting fluid to the working faces of the cutting tool to aid the cutting operation. It is also common place to provide the cutting fluid through the centre of the cutting tool via the tool holder 20.

When machining is carried out, material is removed from the work piece 12 in the form of swarf 22. The properties of the swarf 22 will depend on the machining being carried out and the type of material being machined. However, it is not uncommon for swarf 22 to be in the form of chips or lumps of metal having a diameter in the order of several to tens of millimetres. These types of swarf 22 not only need to be removed from a work piece 12 but can also damage previously machined surfaces and tooling together with other equipment in the vicinity of the machine 10, such as protective screens and the like. Hence, there is a need to remove the swarf as it collects in or around a work piece 12.

In the embodiment shown in Figure 1, the inside surfaces 24 of the work piece 12 have been machined and swarf 22 has collected in a cavity located in the base of the work piece 12, ready for removal.

Figure 2 shows a swarf extraction device 210 (also indicated at 210 in Figure 1) which is used to extract swarf from the work piece 12. The swarf extraction device 210 includes a body 212 having at least one conduit 214 for receiving a flow 215 of cutting fluid (not shown), a connector 216 for connecting the conduit 214 to a source of cutting fluid, a suction tube 218 in fluid communication with the conduit 214; and, an outlet 220 through which cutting fluid (and in some embodiments, swarf) is ejected from the body 212. The conduit 214 is arranged to create a pressure drop at the suction inlet 222 of the suction tube 218 using the flow of cutting fluid when in use.

The connector 216 is in the form of a standard connector which can be accepted by the tool holder of the CNC cutting machine in place of a cutting tool and receive cutting fluid from the machine's supply which is ordinarily used for machining. Thus, the connector 216 is used to connect the conduit 214 to the source of cutting fluid and to mount the swarf extraction device 210 to the cutting machine (10, Figure 1).

The conduit 214 extends from the connector 216 through the body 212 of the swarf extraction device 210 and terminates in a cutting fluid outlet 220. Thus the conduit 214 provides a fluid path through which the cutting fluid can travel in use. Part way along the conduit 214 there is provided a nozzle 224 which ejects cutting fluid into a flared portion of the conduit 214 in the form of a chamber 226. The chamber 226 includes walls which are angled so as to reduce the cross section of the fluid path to a throat 228 of a diverging section 230 of the conduit 214 which increases in cross section along its length. The arrangement of these parts has the effect of creating a suction device in the form of a Venturi suction device.

The swarf extraction device 210 includes a suction tube 218 having an inlet 222 through which the swarf is collected in use. The suction tube 218 is a hollow section of tube which extends from a first end at the swarf inlet to a second end which provides a suction tube outlet 232 which connects to the conduit 214. The second end of the suction tube 218 includes a flange 234 which is used to provide a mating surface 236 for mounting against a corresponding surface of the body 212. The mounting is achieved with a standard stud and bolt arrangement and is positioned such that the outlet 232 connects the suction tube 218 to the chamber of the Venturi device, upstream of the throat 228.

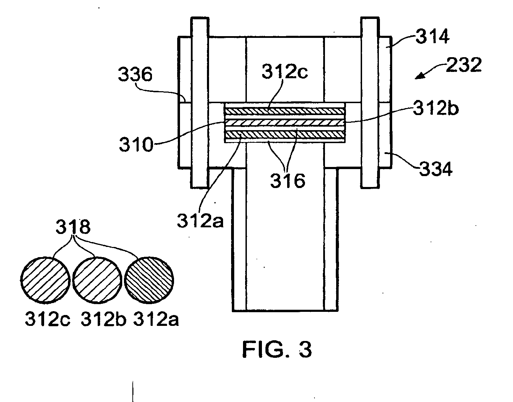

Figure 3 shows a detailed cross-section of the suction tube outlet 232. The suction tube outlet 232 is provided with a filter 310 in the form of a plurality of wire meshes 312a,b,c to prevent the ingestion of swarf into the conduit 214 and cutting fluid. The meshes 312a,b,c housed between a face 336 of the body 314 and a recess in the suction tube outlet flange 314, and are separated from each other and the housing using rubber seals 316.

Each of the meshes 312a,b,c used in the filter 310 has a gauze like structure made from an arrangement of wire filaments 318 in a lattice arrangement. The spacing between the wire filaments 318 is different for each mesh 312a,b,c such that each stage of the mesh filter removes different sized particles from the suction flow to help prevent the filter clogging prematurely.

In the embodiment, three meshes are used. The first mesh closest to the suction tube inlet having the smallest apertures between the wire filaments, (approximately half a millimetre squared. The second and third meshes have aperture sizes of one millimetre squared and two millimetres squared, respectively. As will be appreciated by the skilled person the presence of the meshes will result in a pressure drop in the suction available in the device and the sizes of the meshes will be dependent on the particle size distribution of the swarf.

In use, the swarf extraction device 210 is mounted to the tool holder 20 of the cutting machine 10 when swarf 22 needs to be removed. For example, when a predetermined amount has collected in the cavity or after a predetermined duration of machining. The suction tube 218 can then be presented to the cavity in the work piece and the flow of cutting fluid switched on and pumped into the connector and conduit 214 of the swarf extraction device 210 under pressure. It will be appreciated that the pressure at which the cutting fluid is provided will determine, at least in part, by the amount of suction provided at the inlet and may be adjusted accordingly. Typically, the available pressure in a state of the art CNC machine will be in the region of 14MPa which is particularly advantageous for extracting swarf which includes a large particulate size in the region of 1-10mm.

The pressurised cutting fluid provided by the cutting machine 10 passes along the conduit 214, through the nozzle 236, into the chamber 226, through the throat 228, along the divergent outlet portion 230 and exits to a collection vessel (not shown).

The collection vessel may be any suitable container and possibly returned to the machine thereby recycling it. As will be appreciated, further filters may be provided downstream of the swarf extraction device if necessary.

When the fluid is flowing at a sufficient velocity, the arrangement of the nozzle 224, chamber 226 and throat 228 provide suction to the suction tube 218 and suction tube inlet 222 such that swarf can be extracted. The skilled person will appreciate that the arrangement of the nozzle 224, chamber 226, throat 228, diverging outlet 230, and pressure of the cutting fluid will govern the amount of suction which is provided to the device and that, in addition to the Venturi effect, some suction will be gained from momentum transfer.

Once a predetermined amount of swarf has been collected in the suction tube 218, the tool holder 20 can be manoeuvred to a second location before the cutting fluid flow is switched off. Removing the flow of cutting fluid results in a loss of suction such that the swarf held in the suction tube is free to fall under the force of gravity and exit the device via the suction tube inlet 222. As will be appreciated, a suitable receptacle can be provided beneath the device to collect the swarf.

In some instances it may be advantageous to provide a flow of cutting fluid down the suction tube 218 when evacuating the swarf to aid clearance. The flow may be provided in one of many ways including reversing the flow of the cutting fluid in the swarf extraction device, closing off the cutting fluid outlet or simply reducing the pressure of the flow to a level where the cutting fluid flows down the suction tube under gravity.

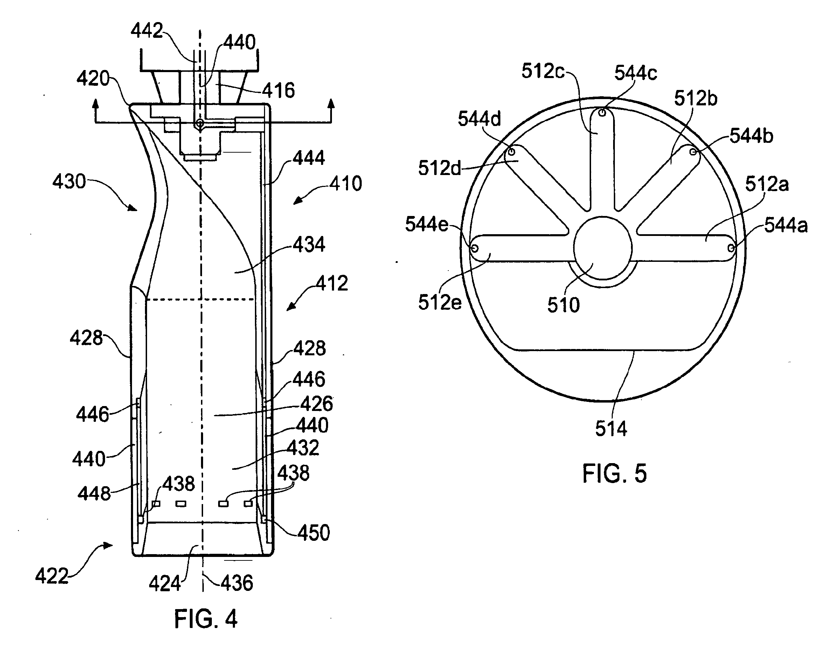

Figures 4 to 7 show two similar but alternative embodiments of the swarf extraction device. The main general difference between these embodiments and the embodiments described above is the alternative configuration of the Venturi device and the ingestion of the swarf into the conduit and cutting fluid flow path, the combination being ejected from a common outlet.

Hence, Figure 4 shows a swarf extraction device 410 for use with a cutting machine 10 (Figure 1) having a generally cylindrical body 412 with a connector 416 at a first end 420 for connecting to the tool holder 20 of the cutting machine 10 and thus the source of cutting fluid. The second end 422 of the cylindrical body 412 is substantially open to provide an inlet 424 to a passageway 426 which is defined by the walls 428 of and extends back up the cylindrical body 412 towards an outlet 430 which is local to the first end 420. The outlet 430 is in form of an aperture having the same diameter as the passageway in a side wall of the cylindrical body. In use, the passageway 426, inlet 424 and outlet 430 provide a suction tube having a suction inlet and a suction outlet through which extracted swarf and cutting fluid is ejected, respectively. Cutting fluid is injected into the passageway 426 via nozzles located towards the second end 422 as described in greater detail later.

The passageway 424 includes two distinct portions. The first portion 432 extends from the inlet 424 coaxially up the cylindrical body 412 with a constant cross-section to meet the second portion 434 (the hypothetical divide between the two sections being denoted by the dashed line in Figure 4). The second portion 434 continues up the cylindrical body 412 but with a trajectory which is angled with respect to the longitudinal axis 436 of the swarf extraction device 410. In other words, the second portion side wall of the passageway 426 which faces the outlet 430 is angled towards the outlet 430 so as to give the passageway 426 a bent configuration. In the embodiment the angle of the bent portion lies at approximately 40 degrees to the longitudinal axis 436. Having a bent configuration in this way allows the trajectory of the swarf and cutting fluid to be altered towards the outlet 430 so as to help reduce impact of the swarf on the wall of the cylindrical body 412 and the associated wear that this would cause.

An annular array of nozzles 438 is provided towards the suction inlet 424 for introducing cutting fluid into the suction tube 426. The nozzles 438 are arranged evenly around the suction tube 426 and lie at an angle of approximately 20 degrees to the longitudinal axis 436 so as to direct the fluid substantially up the suction tube 426 towards the outlet 430. The flow of cutting fluid in use provides suction at the suction inlet 424 due to the Venturi effect and mass flow transfer.

Cutting fluid is provided to the each nozzle 438 via a combination of the passageways 440 within the wall 428 of the cylindrical body 412. The network of passageways form a conduit which is arranged to provide a substantially even distribution of cutting fluid to the annular arrangement of nozzles 438 whilst leaving the portion of the cylindrical body 412 which houses the outlet 430.

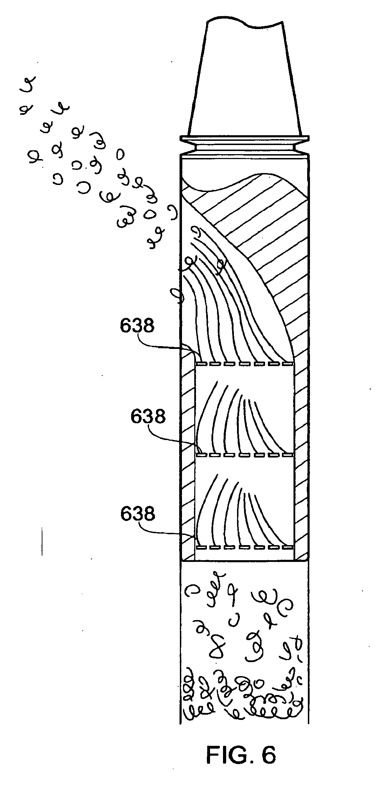

To describe this arrangement in more detail, passageway 440 enters the swarf extraction tool 410 via the connector 416, which in turn, is coupled to and receives cutting fluid from the tool holder when in use. As can be seen in Figures 5 and 6, the conduit 442 descends into the tool 410 coaxially with the longitudinal axis 436 of the cylindrical body 412 and terminates at a junction 510 which divides into five equal radially extending branches 512a-c which lie in a plane perpendicular to the longitudinal axis 436. The longitudinal axes of the five branches 512a-c are circumferentially spaced equally through 180 degrees so as to be separated by 45 degrees. The central branch 512c extends directly away from the suction outlet 430 which is indicated by the flat 514 in Figure 5.

Each of the five branches terminates with one of a first plurality of downwardly extending passageways 444, 544a-e. Each passageway 444 544a-e runs in the wall 428 of the cylindrical body 412 which defines the suction tube in a direction parallel to the other downwardly extending passageways and longitudinal axis 436 of the tool. The first plurality of five passageways terminates in a gallery 446 which provides a junction to a second plurality of eight passageways 448 which are evenly spaced around the circumference of the cylindrical body 412. The gallery 446 is an annular passageway of square cross section which extends around the circumference of the cylindrical body 412 and acts to link the downwardly extending passageways such that the cutting fluid can be shared.

The second plurality of downwardly extending passageways 448 terminates in a further gallery 450 towards the second end of the tool 422. This final gallery 450 provides a mixing chamber from which the nozzles extend upwardly from and towards the suction tube. Each of the nozzles is spaced in between pairs of the second plurality of passageways so as to aid even distribution of the flow.

In use and with reference to Figures 1 and 4, the swarf extraction device 410 is mounted to the tool holder 20 of the cutting machine 10 when swarf 22 needs to be removed. The suction tube 426 is then be presented to the cavity in the work piece and the flow of cutting fluid switched on and pumped under pressure into the connector 416 and conduit 440 of the swarf extraction device which includes the network of passageways and nozzles 438. It will be appreciated that the pressure at which the cutting fluid is provided will be determined, at least in part, by the amount of suction required at the inlet and may be adjusted accordingly. Typically, the available pressure in a state of the art CNC machine will be in the region of 14MPa which is particularly advantageous for extracting swarf which includes a large particulate size in the region of 1-10mm.

The pressurised cutting fluid provided by the cutting machine 10 passes along the network of passageways 440, through the nozzles 438, into the suction tube 426 and out of the outlet 430. When the fluid is flowing at a sufficient velocity, the arrangement of the nozzles 438 and the suction tube provides suction via a Venturi effect and mass transfer at the suction inlet 424 such that swarf can be collected and mixed with the swarf which are ejected out of the outlet.

Prior to the collection process, the outlet 430 is oriented such that the ejected cutting fluid and swarf is directed towards a suitable collection device. This may involve, for example, directing the flow against a wall of the cutting machine such that it is collected by grates in the floor to be collected by a swarf conveyor system. The cutting fluid can then be filtered and recycled accordingly. Of course, it will be appreciated that the fluid flow may have a high velocity when exiting the tool and as such the particulate content of the mixture may be quite abrasive. Hence, it may be necessary to put protective measures in place on any surfaces coming into contact with the ejected material or provide an alternative method of capturing the swarf.

In another embodiment, the body includes a plurality of nozzles 638 arranged in a series of annular arrays spaced along length of the conduit as seen in Figure 6. In this embodiment, one or more extra galleries may be included to allow proper mixing of the fluid.

It will be appreciated that variations of the above embodiments are possible within the scope of the invention as defined by the claims below. For example, some embodiments above are described as having filters, but it will be appreciated that this is not essential. Further, the embodiments described as not having filters may advantageously include filters.

In some embodiments it will be advantageous to alter the dimensions and profiles of the various passageways, tubes and conduits to increase or decrease the suction of the device. For example, the embodiments shown in Figures 4 to 6 may include a suction tube having a profiled internal diameter thereby providing a Venturi device with a greater suction than can be provided by a straight walled tube.

## Claims

1. A cutting machine (10) comprising:
a swarf extraction device (210, 410)having:
a body (212, 412) having at least one conduit (214, 442) for receiving a flow of cutting fluid;
a connector (216, 416) for connecting the conduit to a source of cutting fluid;
a suction tube (218, 426) in fluid communication with the conduit, the suction tube having a suction inlet (222, 422) and a suction outlet (230, 430); and,
a swarf outlet through which the swarf (22) is ejected from the device, wherein the conduit is arranged to create a pressure drop at the suction tube inlet using the flow of cutting fluid when in use,
**characterised in that** the source of cutting fluid is taken from the cutting machine through the tool holder (20) in which the device is mounted.

2. The cutting machine according to claim 1, wherein the swarf extraction device further comprises at least one filter (312a, 312b, 312c, 310) between the conduit and suction tube inlet.

3. The cutting machine according to claim 1 or 2, wherein the swarf extraction device further comprises a plurality of filters (312a, 312b, 312c) between the conduit and suction inlet, each filter allowing differing sizes of swarf to pass through.

4. The cutting machine according to any one of claims 1 to 3 wherein the swarf outlet is the suction tube inlet (222).

5. The cutting machine as claimed in any preceding claim in which the conduit includes at least one nozzle (224, 438).

6. The cutting machine as claimed in claim 5 further comprising at least one nozzle wherein the nozzle is local to the suction tube inlet.

7. The cutting machine as claimed in any of claims 5 to 6 when dependant on claim 1, further comprising a plurality of nozzles (438) along the length of the suction tube.

8. The cutting machine as claimed in any of claims 5 to 7 when dependent on claim 1, wherein the swarf outlet and suction outlet (430) are the same.

9. The cutting machine as claimed in any of claims 5 to 8 when dependent on claim 1, wherein the connector (416) and suction tube (426) are co-axial.

10. The cutting machine as claimed in any one of the previous claims wherein the tool holder is remotely operable.

11. The cutting machine as claimed in any one of the previous claims wherein the source of cutting fluid has a pressure in excess of 10 MPa when in use.

12. A method of extracting swarf (22) from a work piece (12) in a cutting machine (10) according to claim 1, the method comprising the steps of: connecting the swarf extraction device (210) to a source of cutting fluid taken from the cutting machine through the tool holder;
placing the suction tube inlet local to the swarf to be extracted;
passing the cutting fluid through the at least one conduit so as to create suction at the suction tube inlet;
extracting the swarf using the suction tube.

13. The method as claimed in claim 12 wherein the swarf extraction tool further comprises at least one filter (312a, 312b, 312c, 310) placed between the suction inlet and the conduit, the method further comprising the steps of:
extracting a predetermined amount of swarf from the work piece;
manoeuvring the swarf extraction device away from the work piece;
switching off the flow of cutting fluid through the conduit such that the suction at the suction inlet is reduced and the extracted swarf can be removed.

14. The method as claimed in claim 13 further comprising flushing the suction tube with cutting fluid via the conduit.

15. The method as claimed in any of claims 12 to 14 further comprising the steps of mounting a work piece in the cutting machine, the work piece having a cavity in which the swarf has collected;
placing the suction inlet within the entrance of the cavity;
flooding the entrance of the cavity with cutting fluid.

## Patentansprüche

1. Schneidmaschine (10), umfassend:
eine Späneextraktionsvorrichtung (210, 410) mit:
einem Gehäuse (212, 412) mit mindestens einer Leitung (214, 442) zum Empfangen eines Stroms von Schneidflüssigkeit;
einen Verbinder (216, 416) zum Verbinden der Leitung mit einer Quelle für Schneidflüssigkeit;
ein Saugrohr (218, 426) in Fluidverbindung mit der Leitung, wobei das Saugrohr einen Saugeinlass (222, 422) und einen Saugauslass (230, 430) aufweist; und
einen Späneauslass, durch der Späne (22) aus der Vorrichtung ausgeworfen werden, wobei die Leitung dafür ausgelegt ist, unter Verwendung des Stroms von Schneidflüssigkeit einen Druckabfall am Saugrohreinlass zu erzeugen, wenn sie in Betrieb ist,
**dadurch gekennzeichnet, dass** die Quelle für Schneidflüssigkeit durch die Werkzeughalterung (20), in der die Vorrichtung befestigt ist, aus der Schneidmaschine gesaugt wird.

2. Schneidmaschine nach Anspruch 1, wobei die Späneextraktionsvorrichtung ferner mindestens ein Filter (312a, 312b, 312c, 310) zwischen der Leitung und dem Saugrohreinlass umfasst.

3. Schneidmaschine nach Anspruch 1 oder 2, wobei die Späneextraktionsvorrichtung ferner mehrere Filter (312a, 312b, 312c) zwischen der Leitung und dem Saugeinlass umfasst, wobei jedes Filter Späne verschiedener Größen durchlässt.

4. Schneidmaschine nach einem der Ansprüche 1 bis 3, wobei der Späneauslass der Saugrohreinlass (222) ist.

5. Schneidmaschine nach einem der vorangehenden Ansprüche, in der die Leitung mindestens eine Düse (224, 438) aufweist.

6. Schneidmaschine nach Anspruch 5, ferner mindestens eine Düse umfassend, wobei die Düse nahe am Saugrohreinlass angeordnet ist.

7. Schneidmaschine nach einem der Ansprüche 5 bis 6, soweit abhängig von Anspruch 1, ferner mehrere Düsen (438) entlang der Länge des Saugrohrs umfassend.

8. Schneidmaschine nach einem der Ansprüche 5 bis 7, soweit abhängig von Anspruch 1, wobei der Späneauslass und der Saugauslass (430) identisch sind.

9. Schneidmaschine nach einem der Ansprüche 5 bis 8, soweit abhängig von Anspruch 1, wobei der Verbinder (416) und das Rohr (426) koaxial sind.

10. Schneidmaschine nach einem der vorangehenden Ansprüche, wobei die Werkzeughalterung fernbedienbar ist.

11. Schneidmaschine nach einem der vorangehenden Ansprüche, wobei die Quelle für Schneidflüssigkeit einen Druck von über 10 MPa aufweist, wenn sie in Betrieb ist.

12. Verfahren zum Extrahieren von Spänen (22) aus einem Werkstück (12) in einer Schneidmaschine (10) nach Anspruch 1, wobei das Verfahren die folgenden Schritte umfasst:
Verbinden der Späneextraktionsvorrichtung (210) mit einer Quelle für Schneidflüssigkeit, die durch die Werkzeughalterung aus der Schneidmaschine geholt wird;
Anordnen des Saugrohreinlasses nahe an dem Spänen, die extrahiert werden sollen;
Leiten der Schneidflüssigkeit durch die mindestens eine Leitung, um eine Saugwirkung am Saugrohreinlass zu erzeugen;
Extrahieren der Späne unter Verwendung des Saugrohrs.

13. Verfahren nach Anspruch 12, wobei das Späneextraktionswerkzeug ferner mindestens ein Filter (312a, 312b, 312c, 310) aufweist, das zwischen dem Saugeinlass und der Leitung angeordnet ist, wobei das Verfahren ferner die folgenden Schritte umfasst:
Extrahieren einer vorgegebenen Menge an Spänen aus dem Werkstück;
Manövern der Späneextraktionsvorrichtung weg von dem Werkstück;
Abstellen des Stroms von Schneidflüssigkeit durch die Leitung, so dass die Saugwirkung am Saugeinlass verringert wird und der extrahierte Schneidstaub entfernt werden kann.

14. Verfahren nach Anspruch 13, ferner das Spülen des Saugrohrs mit Schneidflüssigkeit durch die Leitung umfassend.

15. Verfahren nach einem der Ansprüche 12 bis 14, ferner die Schritte des Befestigens eines Werkstücks in der Schneidmaschine umfassend, wobei das Werkstück einen Hohlraum aufweist, in dem sich die Späne angesammelt haben;
Anordnen des Saugeinlasses im Eingang zu dem Hohlraum; Fluten des Eingangs des Hohlraums mit Schneidflüssigkeit.

## Revendications

1. Une machine à découper (10) comprenant :
un dispositif d'extraction de copeaux (210, 410) possédant :
un corps (212, 412) possédant au moins un conduit (214, 442) destiné à recevoir un flux de fluide de coupe,
un connecteur (216, 416) destiné au raccordement du conduit à une source de fluide de coupe,
un tube d'aspiration (218, 426) en communication fluidique avec le conduit, le tube d'aspiration possédant une admission d'aspiration (222, 422) et une sortie d'aspiration (230, 430), et
une sortie de copeaux au travers de laquelle les copeaux (22) sont éjectés du dispositif, où le conduit est agencé de façon à créer une chute de pression au niveau de l'admission du tube d'aspiration au moyen du flux de fluide de coupe lorsqu'il est en utilisation,
**caractérisée en ce que** la source de fluide de coupe est prélevée à partir de la machine à découper au travers du porte-outil (20) dans lequel le dispositif est monté.

2. La machine à découper selon la Revendication 1, où le dispositif d'extraction de copeaux comprend en outre au moins un filtre (312a, 312b, 312c, 310) entre le conduit et l'admission du tube d'aspiration.

3. La machine à découper selon la Revendication 1 ou 2, où le dispositif d'extraction de copeaux comprend en outre une pluralité de filtres (312a, 312b, 312c) entre le conduit et l' admission d'aspiration, chaque filtre permettant à différentes tailles de copeaux de passer au travers de celui-ci.

4. La machine à découper selon l'une quelconque des Revendications 1 à 3 où la sortie de copeaux est l'admission du tube d'aspiration (222).

5. La machine à découper selon l'une quelconque des Revendications précédentes dans laquelle le conduit comprend au moins une buse (224, 438).

6. La machine à découper selon la Revendication 5 comprenant en outre au moins une buse où la buse est locale à l'admission du tube d'aspiration.

7. La machine à découper selon l'une quelconque des Revendications 5 à 6 lorsqu'elle dépend de la Revendication 1, comprenant en outre une pluralité de buses (438) le long de la longueur du tube d'aspiration.

8. La machine à découper selon l'une quelconque des Revendications 5 à 7 lorsqu'elle dépend de la Revendication 1, où la sortie de copeaux et la sortie d'aspiration (430) sont la même sortie.

9. La machine à découper selon l'une quelconque des Revendications 5 à 8 lorsqu'elle dépend de la Revendication 1, où le connecteur (416) et le tube d'aspiration (426) sont coaxiaux.

10. La machine à découper selon l'une quelconque des Revendications précédentes où le porte-outil est actionnable à distance.

11. La machine à découper selon l'une quelconque des Revendications précédentes où la source de fluide de coupe possède une pression dépassant 10 MPa lorsqu'elle est en utilisation.

12. Un procédé d'extraction de copeaux (22) d'une pièce à travailler (12) dans une machine à découper (10) selon la Revendication 1, le procédé comprenant les opérations suivantes : le raccordement du dispositif d'extraction de copeaux (210) à une source de fluide de coupe prélevée à partir de la machine à découper au travers du porte-outil,
le placement de l'admission du tube d'aspiration localement par rapport aux copeaux à extraire,
le passage du fluide de coupe au travers du au moins un conduit de façon à créer une aspiration au niveau de l'admission du tube d'aspiration,
l'extraction des copeaux au moyen du tube d'aspiration.

13. Le procédé selon la Revendication 12 où l'outil d'extraction de copeaux comprend en outre au moins un filtre (312a, 312b, 312c, 310) placé entre l'admission d'aspiration et le conduit, le procédé comprenant en outre les opérations suivantes :
l'extraction d'une quantité prédéterminée de copeaux de la pièce à travailler,
le déplacement du dispositif d'extraction de copeaux à l'écart de la pièce à travailler,
la désactivation du flux de fluide de coupe au travers du conduit de sorte que l'aspiration au niveau de l'admission d'aspiration soit réduite et que les copeaux extraits puissent être éliminés.

14. Le procédé selon la Revendication 13 comprenant en outre le lavage du tube d'aspiration avec un fluide de coupe par l'intermédiaire du conduit.

15. Le procédé selon l'une quelconque des Revendications 12 à 14 comprenant en outre les opérations de montage d'une pièce à travailler dans la machine à découper, la pièce à travailler possédant une cavité dans laquelle les copeaux se sont amassés,
le placement de l'admission d'aspiration à l'intérieur de l'entrée de la cavité,
l'aspersion de l'entrée de la cavité avec un fluide de coupe.
